# EUROPEAN PATENT APPLICATION

(11) **EP 4 625 528 A1**
(43) Date of publication of application: **01.10.2025**
(21) Application number: 23894301.3
(22) Date of filing: 17.10.2023
(51) Int. Cl.: H01M 4/139, H01M 4/36, H01M 4/62

(54) **METHOD FOR MANUFACTURING ELECTRODE MIXTURE AND METHOD FOR MANUFACTURING ELECTRODE**

(30) Priority: 24.11.2022 JP 2022187384
(71) Applicant: Panasonic Intellectual Property Management Co., Ltd., Kadoma-shi, Osaka 571-0057 (JP)
(72) Inventor: TOMITA, Yosuke, Osaka 571-0057 (JP); KATOU, Daisuke, Osaka 571-0057 (JP); IZUMI, Reiko, Osaka 571-0057 (JP); YAMASHITA, Hiroki, Osaka 571-0057 (JP)
(74) Representative: Eisenführ Speiser
(86) International application number: PCT/JP2023/037541
(87) International publication number: WO 2024/111289

(57) **Abstract**

This method for manufacturing an electrode mixture 1 comprises: forming composite particles 8 by adhering a conductive material 6 to an electrode active material 4; forming a mixture 14 by mixing the composite particles 8 with a grain aggregate 12 of fibrous binders 10; and fibrillation the grain aggregate 12 in the mixture 14 by applying shear force to the grain aggregate 12, whereby an agglomerate 16 is formed in which a plurality of the composite particles 8 are coupled by the fibrous binders 10.

## Description

### TECHNICAL FIELD

The present disclosure relates to a method for manufacturing an electrode mixture and a method for manufacturing an electrode.

### BACKGROUND ART

Patent Literature 1 describes a technique for feeding a granule containing an electrode active material, a binder, and a solvent into a gap between a pair of rolls and compressing it to form a sheet-like electrode mixture layer.

### RELATED-ART LITERATURE

### PATENT LITERATURE

Patent Literature 1: Japanese Unexamined Patent Application Publication No. 2018-186033

### SUMMARY OF INVENTION

### TECHNICAL PROBLEM

When a mixture sheet is formed from electrode mixture powder, it is desirable that the shape of the mixture sheet can be stably maintained. However, stably maintaining the shape is not easy. This is even more so when the mixture sheet is formed from a dry electrode mixture with a low solvent content.

The present disclosure has been made in view of such a situation, and a purpose thereof is to provide a technology for facilitating the forming of a mixture sheet from an electrode mixture.

### SOLUTION TO PROBLEM

One embodiment of the present disclosure is a method for manufacturing an electrode mixture. The method for manufacturing includes: attaching a conductive material to an electrode active material to form a composite particle; mixing the composite particle and a granular mass of a fibrous binder to form a mixed material; and applying shear force to the granular mass in the mixed material to defibrate the granular mass and forming an agglomerate in which multiple composite particles are connected by the fibrous binder.

Another embodiment of the present disclosure is a method for manufacturing an electrode. The method for manufacturing includes: forming an electrode mixture obtained using the method for manufacturing an electrode mixture according to the one embodiment into a mixture sheet; and laminating the mixture sheet on a current collector to form an electrode.

Optional combination of the aforementioned constituting elements, and methods, devices, systems, and the like among which expressions in the present disclosure are transformed are also effective as embodiments of the present disclosure.

### ADVANTAGEOUS EFFECTS OF INVENTION

According to the present disclosure, forming a mixture sheet from an electrode mixture can be facilitated.

### BRIEF DESCRIPTION OF DRAWINGS

[FIG. 1] FIG. 1 is a process drawing of a manufacturing method for an electrode mixture according to an embodiment.
[FIG. 2] FIG. 2 is a process drawing of a manufacturing method for an electrode according to the embodiment.
[FIG. 3] FIG. 3 is a diagram that shows the measurement result of particle size distribution and the result of forming of a mixture sheet in each Example and each Comparative Example.

### DESCRIPTION OF EMBODIMENTS

In the following, the present disclosure will be described based on a preferred embodiment with reference to the drawings. The embodiment is intended to be illustrative only and not to limit the present disclosure, so that it should be understood that not all of the features or combinations thereof described in the embodiment are necessarily essential to the present disclosure. Like reference characters denote like or corresponding constituting elements, members, and processes in each drawing, and repetitive description will be omitted as appropriate. Also, the scale or shape of each component shown in each drawing is defined for the sake of convenience to facilitate the explanation and is not to be regarded as limitative unless otherwise specified. Also, when the terms "first", "second", and the like are used in the present specification or claims, such terms do not imply any order or degree of importance and are used to distinguish one configuration from another, unless otherwise specified. Further, in each drawing, part of a member less important in describing the embodiment may be omitted.

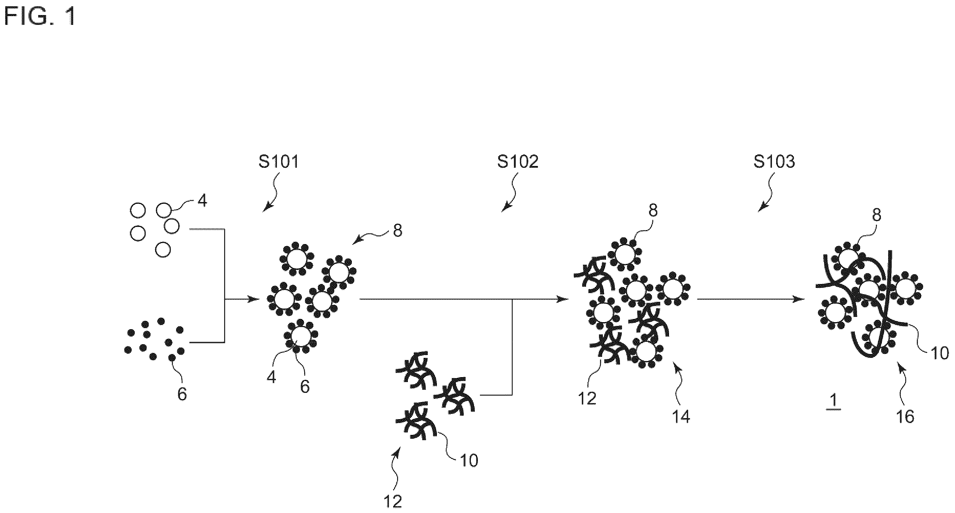

FIG. 1 is a process drawing of a manufacturing method for an electrode mixture 1 according to an embodiment. As shown in FIG. 1, the manufacturing method for the electrode mixture 1 includes a composition process S101, a mixing process S102, and an agglomeration process S103.

The composition process S101 includes attaching a conductive material 6 to an electrode active material 4 to form composite particles 8. For example, particles of the electrode active material 4 and particles of the conductive material 6 are introduced into a publicly-known stirring granulator or particle composition device and stirred. Accordingly, the surface of the electrode active material 4 is coated with the conductive material 6, forming the composite particles 8. Examples of the stirring granulator include FM Mixer (manufactured by NIPPON COKE & ENGINEERING CO., LTD.), High Speed Mixers (manufactured by EARTHTECHNICA Co., Ltd.), Intensive Mixer (manufactured by Nippon Eirich Co., Ltd.), BALANCE GRAN (manufactured by FREUND-TURBO CORPORATION), and vertical granulators (manufactured by POWREX CORPORATION). Examples of the particle composition device include Nobilta (registered trademark) (manufactured by HOSOKAWA MICRON CORPORATION) and MECHANO FUSION (registered trademark) (manufactured by HOSOKAWA MICRON CORPORATION). The electrode active material 4 and the conductive material 6 are selected as appropriate based on the battery type. For example, in the case of a general lithium-ion secondary battery, the electrode active material 4 is lithium cobalt oxide, lithium iron phosphate, or the like for the positive electrode and is graphite or the like for the negative electrode. Also, the conductive material 6 is graphite, carbon black, acetylene black, or the like. As an example, the median diameter of the conductive material 6 is less than 1/20 of the median diameter of the electrode active material 4.

The mixing process S102 includes mixing the composite particles 8 and granular masses 12 of a fibrous binder 10 to form a mixed material 14. For example, the granular masses 12 of the fibrous binder 10 are added into a stirring granulator containing the composite particles 8 and stirred. Accordingly, the composite particles 8 and the granular masses 12 are mixed, forming the mixed material 14. In the present embodiment, the fibrous binder 10 is polytetrafluoroethylene (PTFE).

When the electrode active material 4, the conductive material 6, and the fibrous binder 10 are mixed simultaneously, the adhesion of the conductive material 6 to the surface of the electrode active material 4 may be inhibited by the fibrous binder 10. This may reduce the conductivity of the electrode mixture 1. In contrast, in the present embodiment, the composite particles 8 are formed in the composition process S101, and the composite particles 8 and the fibrous binder 10 are mixed in the mixing process S102 thereafter. This can facilitate the covering of the surface of the electrode active material 4 with the conductive material 6, thereby increasing the conductivity of the electrode mixture 1.

The agglomeration process S103 includes applying shear force to the granular masses 12 in the mixed material 14 to defibrate them and forming an agglomerate 16 in which multiple composite particles 8 are connected by the fibrous binder 10. For example, desired shear force can be applied to the granular masses 12 by adjusting the rotational speed of the stirring blades of the stirring granulator containing the mixed material 14. When the granular masses 12 are subjected to the shear force, fragments of the fibrous binder 10 are unraveled linearly. Accordingly, a network structure is formed by multiple fragments of the fibrous binder 10. The network structure supports the multiple composite particles 8, forming an agglomerate 16 with a larger particle size than each composite particle 8. Through the process set forth above, the electrode mixture 1 containing multiple agglomerates 16 can be obtained.

When the mixed material 14 is kneaded using a roll mill, shear force is applied by, for example, the difference in peripheral speed between adjacent rolls to the granular masses 12, which are defibrated accordingly. Also, when the mixed material 14 is kneaded using a kneading screw, shear force is applied by, for example, the difference in speed between the screw and a wall surface to the granular masses 12, which are defibrated accordingly. The mixing process S102 and the agglomeration process S103 can be performed as a series of processes or simultaneously in parallel. That is, when the granular masses 12 are introduced into the stirring granulator, mix of the composite particles 8 and the granular masses 12 and defibration of the granular masses 12 may occur continuously or simultaneously in parallel.

The electrode mixture 1 as an example is a dry electrode mixture. The dry electrode mixture has a solvent content of 10% by mass or less, or 5% by mass or less, or 3% by mass or less, or 0.1% by mass, or substantially 0%, with respect to the total mass of the dry electrode mixture. When a dry electrode mixture is used, a drying oven for a mixture sheet 18, which will be described later, can be omitted. The electrode mixture 1 may also be a wet electrode mixture having a solvent content of more than 10% by mass.

When the electrode mixture 1 is used for a negative electrode, examples of the solvent used for the electrode mixture 1 include: water; alcohols such as ethanol; N-methylpyrrolidone (NMP); toluene; dimethyl carbonate (DMC); and ethyl methyl carbonate (EMC). When the electrode mixture 1 is used for a positive electrode, examples of the solvent include: amine-based solvents such as N,N-dimethylaminopropylamine and diethylenetriamine; ether-based solvents such as tetrahydrofuran; ketone-based solvents such as methyl ethyl ketone; ester-based solvents such as methyl acetate; and amide-based solvents such as dimethylacetamide and N-methyl-2-pyrrolidone.

In the mixing process S102, the conductive material 6 may be further added to the composite particles 8 and the granular masses 12 and mixed. By adding the conductive material 6 when forming the mixed material 14, the conductive material 6 easily adheres to the surface of the fibrous binder 10. This can further increase the conductivity between the composite particles 8 in the agglomerates 16. Therefore, the conductivity of the electrode mixture 1 can be further increased.

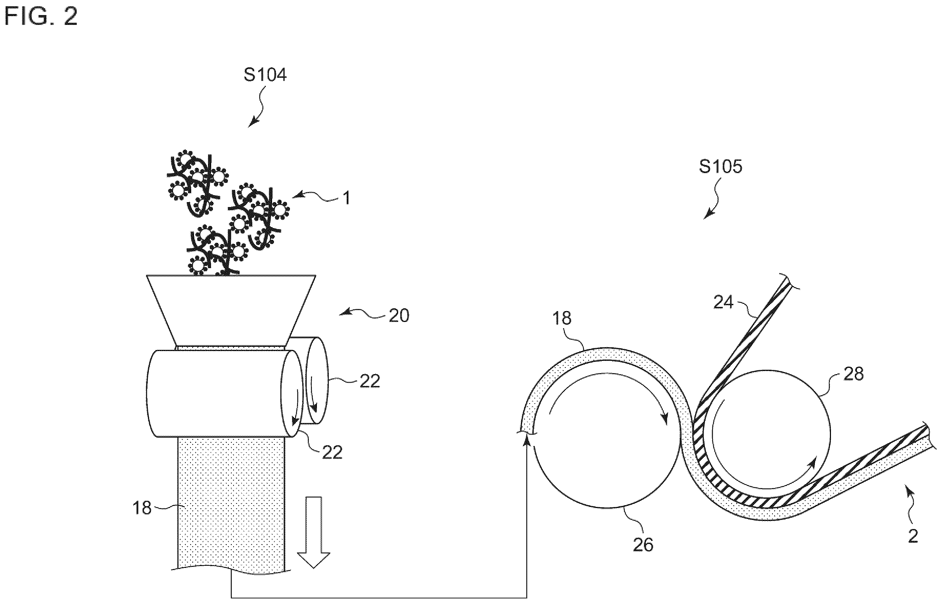

The resulting electrode mixture 1 is used in the manufacture of an electrode 2. FIG. 2 is a process drawing of a manufacturing method for the electrode 2 according to the embodiment. As shown in FIG. 2, the manufacturing method for the electrode 2 includes a forming process S104 and a laminating process S105.

The forming process S104 includes forming the electrode mixture 1 obtained using the aforementioned manufacturing method into a mixture sheet 18. For example, the electrode mixture 1 is stored in a publicly-known storage unit 20. The storage unit 20 has a publicly-known structure, such as a combination of a hopper and a feeder. The electrode mixture 1 stored in the storage unit 20 is fed into a gap between a pair of feed rolls 22 of the feeder. The pair of feed rolls 22 rotate in opposite directions and compress the electrode mixture 1 fed to the gap therebetween into a sheet. Thus, the mixture sheet 18 is formed. The mixture sheet 18 is continuously provided from the gap between the pair of feed rolls 22. The mixture sheet 18 may be stretched so that it reaches a desired thickness before the laminating process S105.

The laminating process S105 includes laminating the mixture sheet 18 on a current collector 24 to form the electrode 2. For example, the mixture sheet 18 is supported and conveyed on the circumferential surface of a conveyance roll 26. Also, a lamination roll 28 is provided at a position facing the conveyance roll 26. The current collector 24 is supported and conveyed on the circumferential surface of the lamination roll 28. The mixture sheet 18 and the current collector 24 pass through the gap between the conveyance roll 26 and the lamination roll 28. At the time, the mixture sheet 18 and the current collector 24 are pressurized in a state of overlapping each other. Accordingly, the mixture sheet 18 is laminated on the current collector 24, forming the electrode 2. In the laminating process S105 of the present embodiment, the mixture sheet 18 can be laminated on the current collector 24 without heating. In the case of a general lithium-ion secondary battery, the current collector 24 is constituted by aluminum foil or the like for the positive electrode and is constituted by copper foil or the like for the negative electrode.

As described above, in the manufacturing method for the electrode mixture 1 according to the present embodiment, the composite particles 8 of the electrode active material 4 and the conductive material 6 are formed before the composite particles 8 and the granular masses 12 of the fibrous binder 10 are mixed. Thereafter, the granular masses 12 in the mixed material 14 are defibrated to form the agglomerates 16 in which multiple composite particles 8 are connected by the fibrous binder 10. This can facilitate forming the mixture sheet 18 from the electrode mixture 1, compared to the case where the agglomerates 16 of the composite particles 8 are not formed.

In particular, when the electrode mixture 1 is a dry electrode mixture, maintaining the shape of the mixture sheet 18 is more difficult than the case where the electrode mixture 1 is a wet electrode mixture. Therefore, the manufacturing method for the electrode mixture 1 of the present embodiment can function particularly effectively when the electrode mixture 1 is a dry type. Also, with the manufacturing method for the electrode mixture 1 of the present embodiment, the conductivity of the electrode mixture 1 can be increased. In particular, when the electrode mixture 1 is a positive electrode mixture, higher conductivity tends to be required compared to the case where the electrode mixture 1 is a negative electrode mixture. Therefore, the manufacturing method for the electrode mixture 1 of the present embodiment can function particularly effectively when the electrode mixture 1 is for a positive electrode.

When forming the mixture sheet 18 is difficult, it is conceivable to apply the electrode mixture 1 to the current collector 24 and form the electrode mixture 1 into a sheet on the current collector 24, thereby forming an electrode mixture layer. However, in this case, adjusting the thickness of the electrode mixture layer is not easy. In contrast, in the present embodiment, the mixture sheet 18 is formed directly from the electrode mixture 1. Accordingly, the thickness of the mixture sheet 18 can be adjusted in a state without the current collector 24. Therefore, the thickness of the mixture sheet 18 can be adjusted easily with high accuracy. Further, by laminating the mixture sheet 18 on the current collector 24 to form the electrode 2, the electrode 2 of higher quality can be obtained.

An embodiment of the present disclosure has been described in detail. The abovementioned embodiment merely describes a specific example for carrying out the present disclosure. The embodiment is not intended to limit the technical scope of the present disclosure, and various design modifications, including changes, addition, and deletion of constituting elements, may be made to the embodiment without departing from the spirit of the present disclosure defined in the claims. Such an additional embodiment with a design modification added has the effect of each of the combined embodiment and modification. In the aforementioned embodiment, matters to which design modifications may be made are emphasized with the expression of "of the present embodiment", "in the present embodiment", or the like. However, design modifications may also be made to matters without such expression. Optional combinations of constituting elements included in the embodiment may also be employed as additional aspects of the present disclosure. Also, the hatching provided on the cross sections in the drawings does not limit the materials of the objects with the hatching.

The embodiment may be defined by the following Items.
Item 1 A method for manufacturing an electrode mixture (1), the method including:
   attaching a conductive material (6) to an electrode active material (4) to form a composite particle (8);
   mixing the composite particle (8) and a granular mass (12) of a fibrous binder (10) to form a mixed material (14); and
   applying shear force to the granular mass (12) in the mixed material (14) to defibrate the granular mass (12) and forming an agglomerate (16) in which a plurality of the composite particles (8) are connected by the fibrous binder (10).
Item 2 The method for manufacturing an electrode mixture (1) according to Item 1, wherein the forming of the mixed material (14) includes adding the conductive material (6) to the composite particle (8) and the granular mass (12) and mixing them.
Item 3 The method for manufacturing an electrode mixture (1) according to Item 1 or 2, wherein the fibrous binder (10) is polytetrafluoroethylene.
Item 4 A method for manufacturing an electrode (2), the method including:
   forming an electrode mixture (1) obtained using the method for manufacturing an electrode mixture (1) according to any one of Items 1 through 3 into a mixture sheet (18); and
   laminating the mixture sheet (18) on a current collector (24) to form an electrode (2).

### Examples

Examples of the present invention will now be described by way of example only to suitably describe the present invention and should not be construed as limiting the present invention.

### Example 1

First, 1000 g of a lithium transition metal composite oxide as an electrode active material and 10 g of acetylene black as a conductive material were introduced into a particle composition device NOB300-Nobilta (registered trademark) (manufactured by HOSOKAWA MICRON CORPORATION). Then, mixing was performed for five minutes to form composite particles. Subsequently, the obtained composite particles and 10 g of PTFE granular masses as a binder were introduced into a stirring granulator FM-5 (manufactured by NIPPON COKE & ENGINEERING CO., LTD.), in which the mixed material of the composite particles and PTFE was stirred and kneaded for 3 minutes, with the peripheral speed of the stirring blades set to 32 m/s. Thus, the electrode mixture was obtained.

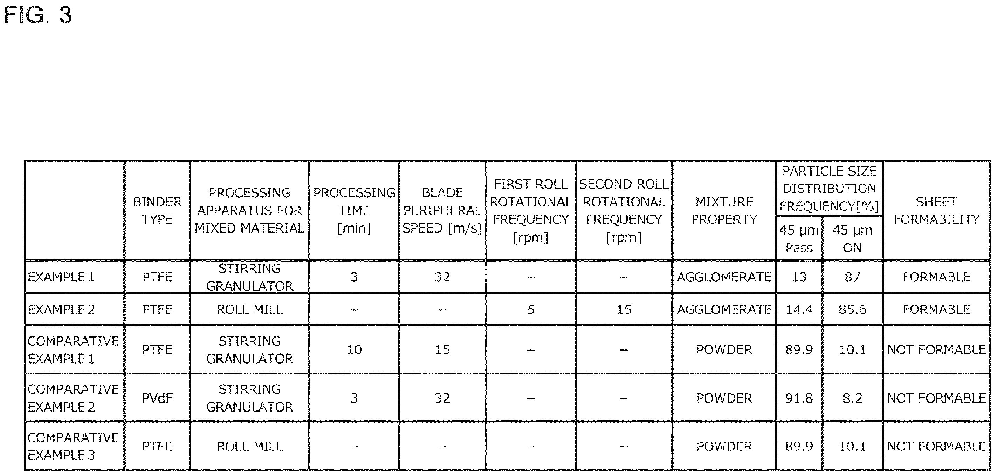

The particle size distribution of the obtained electrode mixture was measured by a sieving method. Also, the obtained electrode mixture was introduced into a roll former to form a mixture sheet. The measurement result of the particle size distribution and the result of the forming of the mixture sheet are shown in FIG. 3.

### Example 2

The preparation of the electrode mixture, measurement of the particle size distribution, and forming of the mixture sheet were performed in the same manner as in Example 1, except that the mixed material was kneaded using a two roll mill (manufactured by Imoto machinery Co., LTD). In the two roll mill, the rotational frequency of the first roll was 5 rpm, and the rotational frequency of the second roll was 15 rpm. Therefore, the roll speed ratio was 1:3. The measurement result of the particle size distribution and the result of the forming of the mixture sheet are shown in FIG. 3.

### Comparative Example 1

The preparation of the electrode mixture, measurement of the particle size distribution, and forming of the mixture sheet were performed in the same manner as in Example 1, except that the mixed material was stirred for 10 minutes with the peripheral speed of the stirring blades set to 15 m/s. The measurement result of the particle size distribution and the result of the forming of the mixture sheet are shown in FIG. 3.

### Comparative Example 2

The preparation of the electrode mixture, measurement of the particle size distribution, and forming of the mixture sheet were performed in the same manner as in Example 1, except that 10 g of polyvinylidene fluoride (PVdF) was used as the binder. The measurement result of the particle size distribution and the result of the forming of the mixture sheet are shown in FIG. 3.

### Comparative Example 3

The preparation of the electrode mixture, measurement of the particle size distribution, and forming of the mixture sheet were performed in the same manner as in Example 2, except that the kneading process for the mixed material was not performed. The measurement result of the particle size distribution and the result of the forming of the mixture sheet are shown in FIG. 3.

FIG. 3 is a diagram that shows the measurement result of the particle size distribution and the result of the forming of the mixture sheet in each Example and each Comparative Example. As shown in FIG. 3, in Example 1, the particles that passed through a sieve with a mesh size of 45 µm were 13% of the total electrode mixture, and the particles remaining on the sieve were 87% of the total electrode mixture. Also, in Example 2, the particles that passed through a sieve with a mesh size of 45 µm were 14.4% of the total electrode mixture, and the particles remaining on the sieve were 85.6% of the total electrode mixture. From these results, it was confirmed that the electrode mixtures in Examples 1 and 2 were mostly constituted by agglomerates with large particle sizes. Also, the mixture sheets could be formed in Examples 1 and 2.

In Comparative Examples 1-3, the particles that passed through a sieve with a mesh size of 45 µm were about 90% to 92% of the total electrode mixture, and the particles remaining on the sieve were about 8% to 10% of the total electrode mixture. From these results, it was confirmed that the electrode mixtures in Comparative Examples 1-3 were mostly constituted by fine powder. Also, the mixture sheets could not be formed in Comparative Examples 1-3. In other words, even when the electrode mixtures were formed into sheets, they could not maintain their shapes and collapsed.

From the above results, it was confirmed that the mixture sheet can be formed easily and stably when the electrode mixture contains agglomerates in which composite particles are connected by a fibrous binder. The PVdF contained in the electrode mixture of Comparative Example 2 is a binder that is less likely to defibrate than PTFE. Therefore, it is considered that the composite particles in Comparative Example 2 did not agglomerate even though the same shear force as in Example 1 was applied to the mixed material. It is considered that, in Comparative Example 2, a so-called mechanochemical reaction occurred, which provided a state where the surface of each composite particle was coated with PVdF.

### INDUSTRIAL APPLICABILITY

The present disclosure is applicable to a method for manufacturing an electrode mixture and a method for manufacturing an electrode.

### REFERENCE SIGNS LIST

1 electrode mixture, 2 electrode, 4 electrode active material, 6 conductive material, 8 composite particle, 10 fibrous binder, 12 granular mass, 14 mixed material, 16 agglomerate, 18 mixture sheet, 24 current collector

## Claims

1. A method for manufacturing an electrode mixture, the method comprising:
attaching a conductive material to an electrode active material to form a composite particle;
mixing the composite particle and a granular mass of a fibrous binder to form a mixed material; and
applying shear force to the granular mass in the mixed material to defibrate the granular mass and forming an agglomerate in which a plurality of the composite particles are connected by the fibrous binder.

2. The method for manufacturing an electrode mixture according to Claim 1, wherein the forming of the mixed material includes adding the conductive material to the composite particle and the granular mass and mixing them.

3. The method for manufacturing an electrode mixture according to Claim 1 or 2, wherein the fibrous binder is polytetrafluoroethylene.

4. A method for manufacturing an electrode, the method comprising:
forming an electrode mixture obtained using the method for manufacturing an electrode mixture according to Claim 1 or 2 into a mixture sheet; and
laminating the mixture sheet on a current collector to form an electrode.
